# EUROPEAN PATENT APPLICATION

(11) **EP 3 967 659 A1**
(43) Date of publication of application: **16.03.2022**
(21) Application number: 20801642.8
(22) Date of filing: 30.04.2020
(51) Int. Cl.: C01B 32/39

(54) **LIFTING FLIGHT ASSEMBLY FOR USE IN ROTARY FURNACE, AND ROTARY FURNACE**

(30) Priority: 07.05.2019 CN 201920644346 U
(71) Applicant: Inner Mongolia Puruifen Environmental Protection Technology Co., Ltd., Inner Mongolia 016014 (CN)
(72) Inventor: QIAO, Lizhu, Inner Mongolia 016014 (CN); ZHANG, Zhen, Inner Mongolia 016014 (CN); PENG, Hanzhong, Inner Mongolia 016014 (CN); SHANG, Yongfei, Inner Mongolia 016014 (CN); YU, Haiqing, Inner Mongolia 016014 (CN); ZHAO, Qing, Inner Mongolia 016014 (CN); ZHU, Xiaolong, Inner Mongolia 016014 (CN); YANG, Yuan, Inner Mongolia 016014 (CN)
(74) Representative: Lermer, Christoph
(86) International application number: PCT/CN2020/088428
(87) International publication number: WO 2020/224550

(57) **Abstract**

The present disclosure relates to a lifting plate assembly for a rotary furnace, and a rotary furnace. The lifting plate assembly is installed on an inner wall of a furnace body (1) of the rotary furnace, and includes first lifting plates (2), second lifting plates (3) and fixed members (4); the fixed members (4) are arranged at intervals on the inner wall of the furnace body (1);the first lifting plates (2) and the second lifting plates (3) are respectively connected with the fixed members (4); and a length of the first lifting plate (2) is larger than a length of the second lifting plate (3). In the lifting plate assembly for the rotary furnace of the present disclosure, by alternately arranging the first lifting plates and second lifting plates with different lengths, a better carbonization effect on the materials can be ensured.

## Description

### CROSS-REFERENCE TO RELATED APPLICATIONS

The present application claims priority to the Chinese patent application No. CN201920644346.3 filed with the Chinese National Intellectual Property Administration on May 7, 2019, titled "Activated Carbon Carbonization Rotary Furnace", the entire content of which is incorporated into the present application by reference.

### FIELD OF THE INVENTION

The present disclosure relates to the technical field of material processing, in particular to a lifting plate assembly for a rotary furnace and a rotary furnace for drying and carbonization processes of activated carbon-related materials.

### BACKGROUND

A rotary furnace is an important equipment for heat treatment of materials such as drying and dry distillation in the industry, in which the design and installation of a lifting plate not only have an influence on the final performance of the heat-treated materials, but also affect the use efficiency of the rotary furnace.

In the activated carbon carbonization process, the lifting plates in existing carbonization rotary furnaces are mostly formed into a " 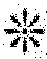 " shape for material spraying by welding Q235 steel plate, so that the material is raised in the carbonization rotary furnace to contact a heat source so that the material is carbonized.

However, in the actual working process, the arrangement and welding of existing lifting plates in the carbonization rotary furnaces may easily cause problems of deformation of the lifting plate, crack of the weld seam, breakage and falling of the lifting plate, damage to the particle size of the material, poor carbonization effect, etc. At the same time, the arrangement of the above-mentioned lifting plate leads to a narrow inner space of the rotary furnace, which affects the efficiency and effectiveness of installation and maintenance.

### SUMMARY OF THE INVENTION

An object of the present disclosure is to solve the above problems and provide a lifting plate assembly for a rotary furnace and a rotary furnace, aiming at solving the problems of small inner space of a furnace body of the rotary furnace, and easy damage, difficult installation and difficult maintenance of the lifting plate, etc.

Another object of the present disclosure is to provide a lifting plate assembly for a rotary furnace and a rotary furnace, aiming at solving the problems of material wear and poor carbonization effect easily caused by the arrangement of the lifting plate.

In order to achieve the above objects, the present disclosure provides a lifting plate assembly for a rotary furnace. The lifting plate assembly is installed on an inner wall of a furnace body of the rotary furnace and includes first lifting plates, second lifting plates and fixed members, and the fixed members are arranged at intervals on the inner wall of the furnace body;
the first lifting plates and the second lifting plates are respectively connected with the fixed members; and
a length of the first lifting plate is larger than a length of the second lifting plate.

According to an aspect of the present disclosure, the first lifting plates and the second lifting plates are alternately arranged in the furnace body.

According to an aspect of the present disclosure, the alternate arrangement is an alternate arrangement in a circumferential direction and/or an axial direction of the furnace body.

According to an aspect of the present disclosure, the first lifting plates and the second lifting plates are respectively arranged at equal angular intervals in the circumferential direction of the furnace body.

According to an aspect of the present disclosure, the first lifting plates and the second lifting plates are alternately arranged at equal intervals in the axial direction of the furnace body respectively.

According to an aspect of the present disclosure, the first lifting plates and the second lifting plates are detachably connected to the fixed members respectively.

According to an aspect of the present disclosure, the connection includes bolt connection, insertion connection or bonding.

According to an aspect of the present disclosure, the fixed members are welded to the inner wall of the furnace body.

According to an aspect of the present disclosure, the fixed members are connected to the furnace body by intermittent welding.

According to an aspect of the present disclosure, welding craters are provided at equal intervals between the fixed members and the furnace body.

According to an aspect of the present disclosure, the welding crater has a length of 10mm-15mm and an interval of 500mm-600mm.

According to an aspect of the present disclosure, the length of the second lifting plate is 1/2-2/3 of the length of the first lifting plate.

According to an aspect of the present disclosure, the first lifting plates and the second lifting plates are alternately arranged in a furnace middle section and a furnace tail section of the furnace body.

According to an aspect of the present disclosure, only the second lifting plates are provided in a furnace head section of the furnace body.

According to an aspect of the present disclosure, the first lifting plate includes a first plate piece and a second plate piece connected in sequence, and the second lifting plate includes a third plate piece and a fourth plate piece connected in sequence;
the first plate piece and the second plate piece are arranged inclined to each other; and
the third plate piece and the fourth plate piece are arranged inclined to each other.

According to an aspect of the present disclosure, an included angle between the first plate piece and the second plate piece and an included angle between the third plate piece and the fourth plate piece are larger than 90° and smaller than 180°, and the second plate piece and the fourth plate piece have a length of 50mm-80mm.

According to an aspect of the present disclosure, the second plate piece and the fourth plate piece in the furnace middle section of the furnace body have a length of 60mm-70mm;
the second plate piece and the fourth plate piece in the furnace tail section of the furnace body have a length of 50mm-60mm; and
the fourth plate piece in the furnace head section of the furnace body have a length of 70mm-80mm.

According to an aspect of the present disclosure, an included angle is formed between the first lifting plate and/or the second lifting plate and an axis of the furnace body.

According to an aspect of the present disclosure, in the furnace tail section of the furnace body, the first lifting plate and/or the second lifting plate are parallel with the axis of the furnace body.

According to an aspect of the present disclosure, in the furnace middle section of the furnace body, an included angle is formed between the first lifting plate and/or the second lifting plate and the axis of the furnace body, and the included angle ranges from 1° to 2°.

According to an aspect of the present disclosure, in the furnace head section of the furnace body, an included angle is formed between the second lifting plate and the axis of the furnace body, and the included angle ranges from 2° to 3°.

According to an aspect of the present disclosure, in a radial direction of the furnace body, a distance between an end of the first lifting plate that is close to a central axis of the furnace body and the central axis of the furnace body is larger than 550mm.

According to an aspect of the present disclosure, a surface roughness Ra of the first lifting plate and/or the second lifting plate is ≤ 3.2µm.

The present disclosure also provides a rotary furnace, which includes a furnace body and the lifting plate assembly for a rotary furnace as described above.

According to an aspect of the present disclosure, feed guide plates and/or discharge guide plates are further included;
the first lifting plates and the second lifting plates are located between the feed guide plates and the discharge guide plates;
the feed guide plates are located on a feed side of the furnace body; and
the discharge guide plates are located on a discharge side of the furnace body.

According to an aspect of the present disclosure, an included angle is formed between the feed guide plate and/or the discharge guide plate and the axis of the furnace body, and the included angle ranges from 25° to 60°.

According to an aspect of the present disclosure, a length of the discharge guide plate is 1/3-2/3 of a length of the feed guide plate.

According to an aspect of the present disclosure, the feed guide plate and/or the discharge guide plate are arranged on the inner wall of the furnace body at intervals in the circumferential direction of the furnace body.

According to an aspect of the present disclosure, the feed guide plates and/or the discharge guide plates are arranged on the inner wall of the furnace body at equal intervals in the circumferential direction of the furnace body, and the included angles formed between the feed guide plate and/or the discharge guide plate and the central axis of the furnace body are the same.

According to an aspect of the present disclosure, the feed guide plates and/or the discharge guide plates are arranged on the inner wall of the furnace body at equal intervals in the circumferential direction of the furnace body, and the included angles formed between the feed guide plate and/or the discharge guide plate and the central axis of the furnace body gradually increase.

According to an aspect of the present disclosure, the furnace head section of the furnace body is made of high-temperature heat-resistant steel, and the furnace tail section and the furnace middle section are made of 316 steel.

According to an aspect of the present disclosure, welding craters of the furnace head section and the furnace middle section are welded by grooving on both sides and double-sided full welding.

According to an aspect of the present disclosure, a height of the feed guide plate is 250mm-350mm, a height of the discharge guide plate is 200mm-300mm, and a length by which the feed guide plate extends toward the furnace head is 900mm-1000mm.

According to an aspect of the present disclosure, the rotary furnace is used for production of activated carbon.

According to a solution of the present disclosure, fixed members are fixedly arranged on the inner wall of the furnace body, and the first lifting plates and the second lifting plates are respectively detachably connected with the fixed members, such as by bolt connection. As compared with the existing rotary furnaces where the lifting plates are directly welded to the inner wall of the furnace body, the present disclosure can effectively avoid the problems such as deformation, welding crater cracking and the like caused by the fact that thermal stress of the lifting plates cannot be released. At the same time, by adopting the alternate arrangement of the long-sized first lifting plates and the short-sized second lifting plates, the present disclosure can improve the space structure inside the furnace body, which is advantageous for the maintenance of the lifting plates. The alternate arrangement of long and short lifting plates can also reduce the damage to the material when lifting the material, and play a buffering effect on the material, so that the material can fully contact with the flue gas, the quality of the material is better, and the product yield is higher.

According to a solution of the present disclosure, the fixed members are welded to the inner wall of the furnace body by intermittent welding. That is, the fixed members are welded to the furnace body, but the welding craters (weld seams) are not continuous. The welding craters are arranged at equal intervals between the fixed members and the inner wall of the furnace body, with the length of the welding craters being 10mm-15mm, and the intervals being 500mm-600mm. In the actual welding process, the fixed members are welded to the inner wall of the furnace body every other 500mm-600mm, and the welding is performed in an up-and-down alternating manner. The fixed members are first welded to the inner wall of the furnace body from upper side faces, then welded to the inner wall of the furnace body from lower side faces of the fixed members at an interval of 500mm-600mm, and then welded to the inner wall of the furnace body from the upper side faces of the fixed members at an interval of 500mm-600mm. The length of the welding crater at each time of welding is 10mm-15mm. As compared with the situation of directly welding the fixed members to the inner wall of the furnace body, the fixed members are fixedly connected to the inner wall of the furnace body in the above way in the present disclosure so that the thermal stress of the fixed members during the carbonization of the material is easier to release, which avoids the problems of cracking of the welding craters and falling due to the stress that cannot be released under the condition of full welding, thereby ensuring the working stability of the first lifting plates and the second lifting plates.

According to a solution of the present disclosure, the first lifting plate and the second lifting plate are respectively arranged to include a first plate piece and a second plate piece, as well as a third plate piece and a fourth plate piece, the included angle between the first plate piece and the second plate piece and the included angle between the third plate piece and the fourth plate piece are larger than 90° and smaller than 180°, and the second plate piece and the fourth plate piece have a length of 50mm-80mm, so that when the first lifting plates and the second lifting plates lift the materials and the materials fall, the materials will gradually fall down through the second plate piece and the fourth plate piece at a certain inclination angle, thus forming a continuous material curtain. Therefore, the materials can be prevented from directly impinging the lifting plates to cause the materials to break, which improves the quality and yield of carbonized products.

According to an aspect of the present disclosure, the first lifting plates and the second lifting plates are detachably connected to the fixed members, and the first lifting plates and the second lifting plates have certain included angles with the axis of the furnace body, so that the moving speed of the materials can be appropriately increased, and the wear between the materials can be reduced, which is advantageous for improving the product yield.

According to a solution of the present disclosure, a feed guide plate and a discharge guide plate are correspondingly provided on the feed side and the discharge side of the rotary furnace respectively, which facilitates the feeding and discharging of materials, effectively reduces the damage and wear of the materials, and is advantageous for improving the product yield.

### BRIEF DESCRIPTION OF THE DRAWINGS

In order to explain the embodiments of the present disclosure or the technical solutions in the prior art more clearly, the drawings required to be used in the embodiments will be briefly introduced below. Obviously, the drawings in the following description only show some embodiments of the present disclosure, and those skilled in the art may also obtain other drawings based on these drawings without creative work.
FIG. 1 schematically shows the structure of a lifting plate assembly for a rotary furnace of the present disclosure;
FIG. 2 schematically shows an internal structure of a rotary furnace of the present disclosure in a front view perspective; and
FIG. 3 schematically shows the structure of a first lifting plate of the present disclosure.

### DETAILED DESCRIPTION OF THE INVENTION

In order to explain the embodiments of the present disclosure or the technical solutions in the prior art more clearly, the drawings required to be used in the embodiments will be briefly introduced below. Obviously, the drawings in the following description only show some embodiments of the present disclosure, and those skilled in the art may also obtain other drawings based on these drawings without creative work.

When describing the embodiments of the present disclosure, orientational or positional relationships expressed by terms "longitudinal", "transverse", "upper", "lower", "front", "rear", "left", "right", "vertical", "horizontal", "top", "bottom", "inner" and "outer" are based on the orientational or positional relationships shown in the relevant drawings; they are only provided for the convenience of describing the present disclosure and simplifying the description, and do not indicate or imply that the cited device or element must have a particular orientation, or be constructed or operated in a particular orientation; therefore, the above terms should not be construed as limiting the present disclosure.

The present disclosure will be described in detail below with reference to the drawings and specific embodiments. It is impossible to describe all the embodiments in detail herein, but the embodiments of the present disclosure are not limited to the following embodiments.

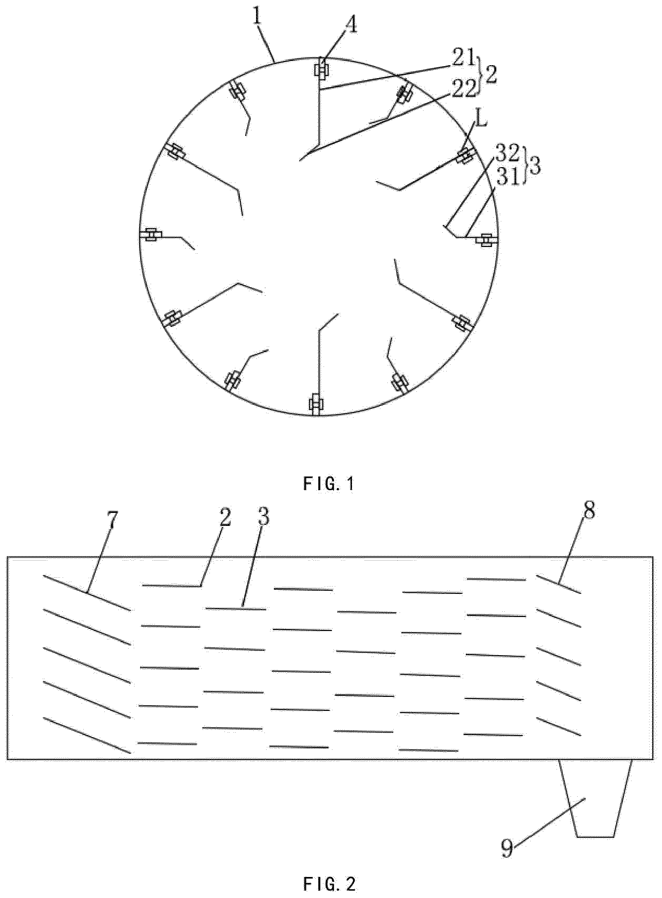

Referring to FIGS. 1 and 2, the lifting plate assembly for a rotary furnace of the present disclosure is installed on an inner wall of a furnace body 1 of the rotary furnace, and includes the furnace body 1, first lifting plates 2, second lifting plates 3 and fixed members 4.

The fixed members 4 are fixed on the inner wall of the rotary furnace 1 and are arranged at intervals on the inner wall of the rotary furnace 1 for fixedly connecting the first lifting plates 2 and the second lifting plates 3. Steel plates or angle steel with a certain thickness may be adopted for the fixed members 4. In this embodiment, the fixed members 4 are made of ∠100° angle steel.

In the present disclosure, the first lifting plates 2 and the second lifting plates 3 are detachably connected to the fixed members 4 respectively. According to an embodiment of the present disclosure, the fixed member 4 is provided with installation through holes, and the first lifting plate 2 and the second lifting plate 3 are provided with corresponding installation holes. Then, the first lifting plate 2 and the second lifting plate 3 are fixedly connected with the fixed member 4 through bolts. During the connection by the bolts, a backstop ring is installed, and dual nuts are used for fixing. Therefore, the bolts can be prevented from loosening, and it is ensured that the first lifting plate 2 and the second lifting plate 3 will not be loosened, thereby ensuring the stability of the lifting operation and guaranteeing the carbonization effect of the material. According to other embodiments of the present disclosure, a snap-fit slot may be provided on the fixed member 4, and the first lifting plate 2 and the second lifting plate 3 can be inserted into the fixed member 4. It is also possible to bond the first lifting plate 2 and the second lifting plate 3 to the fixed member 4, as long as the use strength is satisfied.

In the present disclosure, a length of the first lifting plate 2 is larger than a length of the second lifting plate 3, and the first lifting plates 2 and the second lifting plates 3 are alternately arranged in the furnace body 1. That is, the lifting plates are arranged in the furnace body 1 in an alternating form of the first lifting plate 2, the second lifting plate 3 and the first lifting plate 2. In other words, the lifting plates in the furnace body 1 are arranged in a long-short-long alternating form.

In the rotary furnace of the present disclosure, the fixed members 4 are fixedly arranged on the inner wall of the furnace body 1, and the first lifting plates 2 and the second lifting plates 3 are respectively detachably connected with the fixed members 4. As compared with the existing rotary furnaces where the lifting plates are directly welded to the inner wall of the furnace body, the present disclosure can effectively avoid the problems such as deformation, welding crater cracking and the like caused by the fact that thermal stress of the lifting plates cannot be released. At the same time, by adopting the alternate arrangement of the long-sized first lifting plates 2 and the short-sized second lifting plates 3, the present disclosure can improve the space structure inside the furnace body 1, which is advantageous for the maintenance of the lifting plates. The alternate arrangement of long and short lifting plates can also reduce the damage to the material when lifting the material, and play a buffering effect on the material, so that the material can fully contact with the flue gas, the quality of the material is better, and the product yield is higher.

In the present disclosure, the fixed members 4 are welded to the inner wall of the furnace body 1 by intermittent welding. That is, the fixed members 4 are welded to the furnace body 1, but the welding craters (weld seams) are not continuous. According to an embodiment of the present disclosure, the welding craters are arranged at equal intervals between the fixed members 4 and the inner wall of the furnace body 1, with the length of the welding craters being 10mm-15mm, and the intervals being 500mm-600mm. That is, in the actual welding process, the fixed members 4 are welded to the inner wall of the furnace body 1 every other 500mm-600mm, and the welding is performed in an up-and-down alternating manner. The fixed members 4 are first welded to the inner wall of the furnace body 1 from upper side faces, then welded to the inner wall of the furnace body 1 from lower side faces of the fixed members 4 at an interval of 500mm-600mm, and then welded to the inner wall of the furnace body 1 from the upper side faces of the fixed members 4 at an interval of 500mm-600mm. The length of the welding crater at each time of welding is 10mm-15mm, and the welding craters are arranged at equal intervals on the upper and lower sides of the fixed members 4. Of course, according to the concept of the present disclosure, the welding craters may also be all arranged on the upper side or the lower side of the fixed members 4.

As compared with the situation of directly welding the fixed members 4 to the inner wall of the furnace body 1, the fixed members 4 are fixedly connected to the inner wall of the furnace body 1 in the above way in the present disclosure so that the thermal stress of the fixed members 4 during the carbonization of the material is easier to release, which avoids the problems of cracking of the welding craters and falling due to the stress that cannot be released under the condition of full welding, thereby ensuring the working stability of the first lifting plates 2 and the second lifting plates 3.

According to other embodiments of the present disclosure, when the fixed members 4 are connected to the inner wall of the furnace body 1 by intermittent welding, the lengths of the welding craters may not all be the same, and the welding craters may also be arranged at unequal intervals, as long as the structural strength is satisfied.

In the rotary furnace of the present disclosure, the first lifting plates 2 and the second lifting plates 3 are alternately arranged. According to an embodiment of the present disclosure, the first lifting plates 2 and the second lifting plates 3 are respectively arranged at equal angular intervals in a circumferential direction of the furnace body 1. The angular interval between the first lifting plate 2 and the first lifting plate 2 is the same as or different from the angular interval between the second lifting plate 3 and the second lifting plate 3. In addition, the first lifting plates 2 and the second lifting plates 3 are alternately arranged at equal intervals in an axial direction of the furnace body 1; that is, in a length direction of the furnace body 1, the lifting plates are alternately arranged in a "long-short-long" manner.

According to a second embodiment of the present disclosure, the first lifting plates 2 and the second lifting plates 3 are alternately arranged. According to an embodiment of the present disclosure, the first lifting plates 2 and the second lifting plates 3 are respectively arranged at equal angular intervals in the circumferential direction of the furnace body 1. The angular interval between the first lifting plate 2 and the first lifting plate 2 is the same as or different from the angular interval between the second lifting plate 3 and the second lifting plate 3. In addition, the first lifting plates 2 and the second lifting plates 3 are alternately arranged at equal angular intervals in the circumferential direction of the furnace body 1; that is, in the circumferential direction of the furnace body 1, the lifting plates are alternately arranged in a "long-short-long" manner.

According to a third embodiment of the present disclosure, the first lifting plates 2 and the second lifting plates 3 are respectively arranged at equal angular intervals in the circumferential direction of the furnace body 1. The angular interval between the first lifting plate 2 and the first lifting plate 2 is the same as or different from the angular interval between the second lifting plate 3 and the second lifting plate 3. In addition, the first lifting plates 2 and the second lifting plates 3 are alternately arranged at equal intervals in the axial direction of the furnace body 1. At the same time, the first lifting plates 2 and the second lifting plates 3 are alternately arranged at equal angular intervals in the circumferential direction of the furnace body 1. That is, in both the circumferential direction and the length direction of the furnace body 1, the lifting plates are alternately arranged in a "long-short-long" manner.

In the rotary furnace of the present disclosure, no matter which embodiment is adopted for the first lifting plates 2 and the second lifting plates 3, the length of the second lifting plate 3 is 1/2-2/3 of the length of the first lifting plate 2. According to an embodiment of the present disclosure, the first lifting plate 2 and the second lifting plate 3 are both 8mm thick 316 stainless steel plates, the first lifting plate 2 is 400mm wide and 600mm long, and the second lifting plate 3 is 400mm wide and 300mm long. In other words, both the first lifting plate 2 and the second lifting plate 3 have a size of 400mm in the axial direction of the furnace body 1, and a size of 600mm and 300mm respectively in a radial direction of the furnace body. As compared with the existing Q235 steel plate, 316 stainless steel plate has better heat resistance and corrosion resistance. In the present disclosure, in the radial direction of the furnace body 1, a distance between an end of the first lifting plate 2 that is close to the central axis of the furnace body 1 and the central axis of the furnace body is larger than 1000mm. This provides sufficient operating space for maintenance. Setting the lengths of the first lifting plate 2 and the second lifting plate 3 within the above dimensional relationship is advantageous for spraying the materials more evenly, so that the materials can have a wider contact area with the heat source and the materials are evenly carbonized, which is advantageous for improving product quality.

According to an embodiment of the present disclosure, according to the different positions in the furnace body, the arrangement of the first lifting plates 2 and the second lifting plates 3 is also different. Specifically, the first lifting plates 2 and the second lifting plates 3 are alternately arranged in a furnace middle section and a furnace tail section of the furnace body 1. In a furnace head section of the furnace body 1, only the second lifting plates 3 are provided.

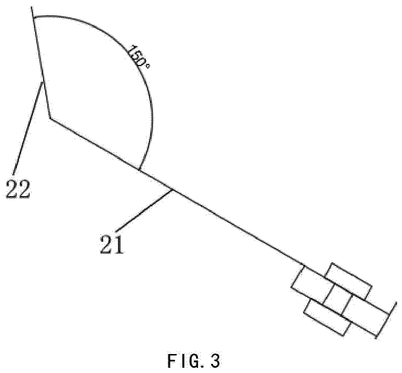

As shown in FIG. 1 and FIG. 3, the first lifting plate 2 of the present disclosure includes a first plate piece 21 and a second plate piece 22, and the second lifting plate 3 includes a third plate piece 31 and a fourth plate piece 32. The first plate piece 21 and the second plate piece 22 are integrally formed, and the third plate piece 31 and the fourth plate piece 32 are integrally formed. The second plate piece 22 and the first plate piece 21 are arranged inclined to each other, and the fourth plate piece 32 and the third plate piece 31 are arranged inclined to each other. An included angle between the first plate piece 21 and the second plate piece 22, and an included angle between the third plate piece 31 and the fourth plate piece 32, are larger than 90° and smaller than 180°, preferably 150°; the second plate piece 22 and the fourth plate piece 32 have a length of 50mm-80mm. For example, both the first lifting plate 2 and the second lifting plate 3 may be formed by bending a front-end 50mm-80mm part of a flat plate, and an included angle between the bent part and the unbent part is 150°.

In the present disclosure, the first lifting plate 2 and the second lifting plate 3 are respectively arranged to include the first plate piece 21 and the second plate piece 22, as well as the third plate piece 31 and the fourth plate piece 32, the included angle between the first plate piece 21 and the second plate piece 22 and the included angle between the third plate piece 31 and the fourth plate piece 32 are 150°, and the length of the second plate piece 22 and the length of the fourth plate piece 32 are 50mm-80mm, so that when the first lifting plates 2 and the second lifting plates 3 lift the materials and the materials fall, the materials will gradually fall down through the inclined second plate piece 22 and fourth plate piece 32 at a certain inclination angle to form a continuous material curtain, which ensures that the materials fully contact the hot flue gas and are heated evenly, so that water and light components quickly volatilize, and the quality and yield of carbonized products are improved. At the same time, the inclined arrangement can prevent the materials from directly impinging the lifting plates to cause the materials to break. In addition, a surface roughness Ra of the first lifting plates 2 and a surface roughness Ra of the second lifting plates 3 of the present disclosure are ≤ 3.2µm, which can further ensure that the materials will not brake when falling onto the lifting plates.

As shown in FIG. 2, the present disclosure also provides a rotary furnace including the above lifting plate assembly for a rotary furnace. The furnace body 1 of the rotary furnace includes a furnace tail section, a furnace middle section and a furnace head section. The furnace tail section is the feed side. The furnace head section is made of high-temperature heat-resistant steel, such as S31008 material. The furnace middle section and the furnace tail section are made of 316 steel. The furnace head section and the furnace middle section are connected by welding, and the welding craters are welded by grooving on both sides and double-sided full welding.

According to an embodiment of the present disclosure, in different positions in the furnace body 1, the arrangements of the first lifting plate 2 and the second lifting plates 3 are not completely the same. Specifically, at the furnace tail section, the first lifting plates 2 and the second lifting plates 3 are alternately arranged for a length of about 3m-4m. The surface roughness Ra of the first lifting plate 2 and the surface roughness Ra of the second lifting plate 3 are ≤3.2µm. A terminal of the length of the first lifting plate 2 is about 550mm away from the radial centerline of the furnace body 1. The length of the second lifting plate 3 is set to be 1/3-1/2 of that of the first lifting plate 2. The first lifting plate 2 and the second lifting plate 3 are arranged parallel to the axis of the furnace body 1. In this way, the materials can fully contact the hot flue gas in this section, and heated evenly, so that water and light components can quickly volatilize, thus enabling the materials to have a certain strength.

In the furnace middle section of the furnace body 1, the first lifting plates 2 and the second lifting plates 3 are connected to the fixed members 4 through bolts, and the arrangement length is about 8m-10m. The length of the first lifting plate 2 in this section may be reduced by 100mm-200mm relative to the length of the first lifting plate 2 in the furnace tail section, and the second lifting plate 3 is also set to be 1/3-1/2 of the size of the first lifting plate 2. The first lifting plate 2 and the second lifting plate 3 have a certain included angle with the axis of the furnace body 1, and the included angle ranges from 1° to 2°. The materials in this section already have a certain strength and need to be in full contact with the flue gas to continue to volatilize so that the carbonization of the materials is completed. As the temperature of the furnace body gradually rises, the thermal expansion amount of the steel becomes larger, and the failure rate increases. The weight of the lifting plate itself can be reduced by shortening the lifting plate, which not only reduces the stress at the connection between the lifting plate and the furnace body, and reduces the failure rate of the equipment, but also makes the material spraying more uniform, which facilitates carbonization.

In the furnace head section of the furnace body 1, only the second lifting plates 3 have to be provided. The arrangement length of the second lifting plates 3 is about 6m-7m, and the length of the second lifting plate 3 is about 200mm-350mm. The second lifting plate 3 has a certain included angle with the axis of the furnace body 1, and the included angle ranges from 2°-3°. This setting can appropriately increase the moving speed of the materials, reduce the wear between the materials, and improve the product yield.

In addition, in the prior art, in order to increase the moving speed of the materials, it is usually necessary to tilt the rotary furnace so that the feed side of the rotary furnace is higher than the discharge side. In the rotary furnace of the present disclosure, according to the above arrangement, the first lifting plate 2 and the second lifting plate 3 in the furnace middle section are set to have an included angle of 1°-2° with the axis of the furnace body 1, and the second lifting plate 3 in the furnace head section is set to have an included angle of 2°-3° with the axis of the furnace body 1, which improves the carbonization effect of the materials and increases the moving speed of the materials; at the same time, the furnace body of the rotary furnace does not need to be tilted, and the rotary furnace is only required to be placed horizontally. In this way, in the actual production process, the stability of the rotary furnace is better.

As shown in FIG. 2, the rotary furnace of the present disclosure further includes feed guide plates 7 and discharge guide plates 8. In the axial direction of the furnace body 1, the feed guide plates 7 and the discharge guide plates 8 are respectively arranged on both sides of the furnace body. The feed guide plates 7 are arranged on the feed side of the furnace body 1, and the discharge guide plates 8 are arranged on the discharge side of the furnace body. The first lifting plates 2 and the second lifting plates 3 are located between the feed guide plates 7 and the discharge guide plates 8.

In the present disclosure, the feed guide plates 7 and the discharge guide plates 8 are respectively arranged at intervals in the circumferential direction of the furnace body 1. According to an embodiment of the present disclosure, angle steel may be first welded on the inner wall of the furnace body 1 by intermittent welding, and then the feed guide plates 7 and the discharge guide plates 8 are respectively fixedly connected to the angle steel through bolts. The feed guide plate 7 and the discharge guide plate 8 have included angles with the axis of the furnace body 1, and the included angles range from 25° to 60°. According to an embodiment of the present disclosure, the feed guide plates 7 are arranged at equal angular intervals in the circumferential direction of the furnace body 1, and the included angle between each feed guide plate 7 and the axis of the furnace body is the same, such as 45°. According to a second embodiment of the present disclosure, the feed guide plates 7 are arranged at equal angular intervals in the circumferential direction of the furnace body 1, and the angle between each feed guide plate 7 and the axis of the furnace body gradually increases. For example, in the circumferential direction of the furnace body, the included angles between two adjacent feed guide plates 7 and the axis of the furnace body have a difference of 3°, and the feed guide plates 7 are arranged spirally on the feed side of the furnace body 1 as a whole. The discharge guide plates 8 of the present disclosure may also be arranged in accordance with the above two arrangements of the feed guide plates 7. In the present disclosure, the length of the discharge guide plate 8 is 1/3-2/3 of the length of the feed guide plate 7. In this embodiment, the height of the feed guide plate 7 and the height of the discharge guide plate 8 are 200mm-300mm, that is, the sizes of the feed guide plate 7 and the discharge guide plate 8 in the radial direction of the furnace body are 200mm-300mm. The length of the feed guide plate 7 in the axial direction of the furnace body is 900mm-1000mm, with the purpose of making the materials move quickly to a high temperature area of the furnace tail section, realizing the rapid solidification of the materials, and reducing the breakage caused by the residence time of the materials in the axial movement and in a low temperature area. The length of the discharge guide plate 8 in the axial direction of the furnace body is 300mm-500mm, with the purpose of reducing the friction during the discharging process of the materials, which would otherwise lead to the loss of the materials, and ensuring the rapid discharging.

In the rotary furnace of the present disclosure, the feed guide plates 7 and the discharge guide plates 8 are correspondingly provided on the feed side and the discharge side of the rotary furnace respectively, and are arranged in accordance with the above arrangement and size relationships, which facilitates the feeding and discharging of materials, effectively reduces the damage and wear of materials, and is advantageous for improving the product yield.

When the rotary furnace of the present disclosure is in production, the materials first enter the feed guide plates 7, then the materials are carbonized through the first lifting plates 2 and the second lifting plates 3, and the temperature of the carbonization section is controlled at 400-550°C. Then, by controlling the rotational speed of the furnace body, the materials are fully sprayed and carbonized between the lifting plates. After that, the materials pass through the discharge guide plates 8 and are discharged from a discharge port 9. The rotary furnace of the present disclosure is used for the production of activated carbon.

The above description illustrates only one embodiment of the present disclosure and is not intended to limit the present disclosure. For those skilled in the art, the present disclosure may have various modifications and changes. Any modification, equivalent replacement, improvement, etc., made within the spirit and principle of the present disclosure shall be included in the scope of protection of the present disclosure.

## Claims

1. A lifting plate assembly for a rotary furnace, the lifting plate assembly being installed on an inner wall of a furnace body (1) of the rotary furnace, wherein the lifting plate assembly comprises first lifting plates (2), second lifting plates (3) and fixed members (4), and the fixed members (4) are arranged at intervals on the inner wall of the furnace body (1);
the first lifting plates (2) and the second lifting plates (3) are respectively connected with the fixed members (4); and
a length of the first lifting plate (2) is larger than a length of the second lifting plate (3).

2. The lifting plate assembly for the rotary furnace according to claim 1, wherein the first lifting plates (2) and the second lifting plates (3) are alternately arranged in the furnace body (1).

3. The lifting plate assembly for the rotary furnace according to claim 2, wherein the alternate arrangement is an alternate arrangement in a circumferential direction and/or an axial direction of the furnace body (1).

4. The lifting plate assembly for the rotary furnace according to claim 3, wherein the first lifting plates (2) and the second lifting plates (3) are respectively arranged at equal angular intervals in the circumferential direction of the furnace body (1).

5. The lifting plate assembly for the rotary furnace according to claim 3, wherein the first lifting plates (2) and the second lifting plates (3) are alternately arranged at equal intervals in the axial direction of the furnace body (1) respectively.

6. The lifting plate assembly for the rotary furnace according to claim 1, wherein the first lifting plates (2) and the second lifting plates (3) are detachably connected to the fixed members (4) respectively.

7. The lifting plate assembly for the rotary furnace according to claim 6, wherein the connection comprises bolt connection, insertion connection or bonding.

8. The lifting plate assembly for the rotary furnace according to claim 1, wherein the fixed members (4) are welded to the inner wall of the furnace body (1).

9. The lifting plate assembly for the rotary furnace according to claim 8, wherein the fixed members (4) are connected to the furnace body (1) by intermittent welding.

10. The lifting plate assembly for the rotary furnace according to claim 9, wherein welding craters are provided at equal intervals between the fixed members (4) and the furnace body (1).

11. The lifting plate assembly for the rotary furnace according to claim 10, wherein the welding crater has a length of 10mm-15mm and an interval of 500mm-600mm.

12. The lifting plate assembly for the rotary furnace according to claim 1, wherein the length of the second lifting plate (3) is 1/2-2/3 of the length of the first lifting plate (2).

13. The lifting plate assembly for the rotary furnace according to claim 12, wherein the first lifting plates (2) and the second lifting plates (3) are alternately arranged in a furnace middle section and a furnace tail section of the furnace body (1).

14. The lifting plate assembly for the rotary furnace according to claim 13, wherein only the second lifting plates (3) are provided in a furnace head section of the furnace body (1).

15. The lifting plate assembly for the rotary furnace according to claim 14, wherein the first lifting plate (2) comprises a first plate piece (21) and a second plate piece (22) connected in sequence, and the second lifting plate (3) comprises a third plate piece (31) and a fourth plate piece (32) connected in sequence;
the first plate piece (21) and the second plate piece (22) are arranged inclined to each other; and
the third plate piece (31) and the fourth plate piece (32) are arranged inclined to each other.

16. The lifting plate assembly for the rotary furnace according to claim 15, wherein an included angle between the first plate piece (21) and the second plate piece (22) and an included angle between the third plate piece (31) and the fourth plate piece (32) are larger than 90° and smaller than 180°, and the second plate piece (22) and the fourth plate piece (32) have a length of 50mm-80mm.

17. The lifting plate assembly for the rotary furnace according to claim 16, wherein the second plate piece (22) and the fourth plate piece (32) in the furnace middle section of the furnace body (1) have a length of 60mm-70mm;
the second plate piece (22) and the fourth plate piece (32) in the furnace tail section of the furnace body (1) have a length of 70mm-80mm; and
the fourth plate piece (32) in the furnace head section of the furnace body (1) have a length of 50mm-60mm.

18. The lifting plate assembly for the rotary furnace according to any one of claims 1 to 17, wherein an included angle is formed between the first lifting plate (2) and/or the second lifting plate (3) and an axis of the furnace body (1).

19. The lifting plate assembly for the rotary furnace according to claim 18, wherein in the furnace tail section of the furnace body (1), the first lifting plate (2) and/or the second lifting plate (3) are parallel with the axis of the furnace body (1), and in the furnace middle section of the furnace body (1), an included angle is formed between the first lifting plate (2) and/or the second lifting plate (3) and the axis of the furnace body (1), and the included angle ranges from 1° to 2°.

20. The lifting plate assembly for the rotary furnace according to claim 19, wherein in the furnace head section of the furnace body (1), an included angle is formed between the second lifting plate (3) and the axis of the furnace body (1), and the included angle ranges from 2° to 3°.

21. The lifting plate assembly for the rotary furnace according to claim 1, wherein in a radial direction of the furnace body (1), a distance between an end of the first lifting plate (2) that is close to a central axis of the furnace body (1) and the central axis of the furnace body (1) is larger than 550mm.

22. The lifting plate assembly for the rotary furnace according to claim 1, wherein a surface roughness Ra of the first lifting plate (2) and/or the second lifting plate (3) is ≤ 3.2µm.

23. A rotary furnace, comprising a furnace body (1), and the lifting plate assembly for the rotary furnace according to any one of claims 1 to 22.

24. The rotary furnace according to claim 23, further comprising feed guide plates (7) and/or discharge guide plates (8);
the first lifting plates (2) and the second lifting plates (3) are located between the feed guide plates (7) and the discharge guide plates (8);
the feed guide plates (7) are located on a feed side of the furnace body (1); and
the discharge guide plates (8) are located on a discharge side of the furnace body (1).

25. The rotary furnace according to claim 24, wherein an included angle is formed between the feed guide plate (7) and/or the discharge guide plate (7) and the axis of the furnace body (1), and the included angle ranges from 25° to 60°.

26. The rotary furnace according to claim 25, wherein a length of the discharge guide plate (8) is 1/3-2/3 of a length of the feed guide plate (7).

27. The rotary furnace according to any one of claims 24 to 26, wherein the feed guide plate (7) and/or the discharge guide plate (8) are arranged on the inner wall of the furnace body (1) at intervals in the circumferential direction of the furnace body (1).

28. The rotary furnace according to claim 26, wherein the feed guide plates (7) and/or the discharge guide plates (8) are arranged on the inner wall of the furnace body (1) at equal intervals in the circumferential direction of the furnace body (1), and the included angles formed between the feed guide plate (7) and/or the discharge guide plate (8) and the central axis of the furnace body (1) are the same.

29. The rotary furnace according to claim 26, wherein the feed guide plates (7) and/or the discharge guide plates (8) are arranged on the inner wall of the furnace body (1) at equal intervals in the circumferential direction of the furnace body (1), and the included angles formed between the feed guide plate (7) and/or the discharge guide plate (8) and the central axis of the furnace body (1) gradually increase.

30. The rotary furnace according to claim 23, wherein the furnace head section of the furnace body (1) is made of high-temperature heat-resistant steel, and the furnace tail section and the furnace middle section are made of 316 steel.

31. The rotary furnace according to claim 30, wherein welding craters of the furnace head section and the furnace middle section are welded by grooving on both sides and double-sided full welding.

32. The rotary furnace according to claim 24, wherein a height of the feed guide plate (7) is 250mm-350mm, a height of the discharge guide plate (8) is 200mm-300mm, and a length by which the feed guide plate (7) extends toward the furnace head is 900mm-1000mm.

33. The rotary furnace according to any one of claims 23 to 30, wherein the rotary furnace is used for production of activated carbon.
